# EUROPEAN PATENT APPLICATION

(11) **EP 4 541 645 A1**
(43) Date of publication of application: **23.04.2025**
(21) Application number: 23824115.2
(22) Date of filing: 22.05.2023
(51) Int. Cl.: B60L 58/12, B60L 53/66, B60K 35/00

(54) **METHOD FOR DETERMINING CHARGING STATION**

(30) Priority: 15.06.2022 KR 20220072808
(71) Applicant: Pmgrow Corporation, Uiwang-si, Gyeonggi-do 16006 (KR)
(72) Inventor: PARK, Jaehong, Seoul 06581 (KR)
(74) Representative: Fink Numrich Patentanwälte PartmbB
(86) International application number: PCT/KR2023/006918
(87) International publication number: WO 2023/243894

(57) **Abstract**

Disclosed according to some embodiments of the present disclosure is a method for determining a charging station, which is performed by a battery scheduling device that performs scheduling for battery operation of a moving object. The method for determining a charging station may comprise the steps of: when a specific condition is satisfied, determining, on the basis of a current location of the moving object and a state of charge (SOC) of the battery, a movement range indicating a range in which the moving object can move from the current location; determining at least one charging station present within the movement range; and determining a first charging station among the at least one charging station on the basis of predetermined preference information of a user and information related to the at least one charging station.

## Description

### CROSS-REFERENCE TO RELATED APPLICATION

This application claims priority to and the benefit of Korean Patent Application No. 10-2022-0072808, filed on June 15, 2022, the disclosure of which is incorporated herein by reference in its entirety.

### TECHNICAL FIELD

The present disclosure relates to a method for determining a charging station and, more particularly, to a method of determining a charging station for charging a battery of a moving object.

### RELATED ART

Currently, technology related to electric vehicles is being rapidly developed. Automobile manufacturers around the world are releasing a variety of electric vehicles and the number of electric vehicle users is also rapidly increasing.

When electric vehicles were first developed, there were issues that driving range was shorter compared to internal combustion engine vehicles and it took long to charge batteries. In addition, the number of charging stations for charging batteries and the number of chargers or charging ports provided at the charging station was insufficient compared to the spread of electric vehicles. Therefore, there was an issue that it took so long time for users of the electric vehicles to use a charger.

In the case of the driving range issue, many improvements have been made due to long-term efforts of automobile manufacturers. For example, the driving range of an electric vehicle first developed by one domestic automobile manufacturer was around 80 km. However, in the case of electric vehicles currently being developed by the automobile manufacturer, the driving range has exceeded 400 km and has reached a level at which it is no longer difficult to operate electric vehicles in real life. Also, as charging port technology has developed with the development of charger technology for charging a battery, an amount of time used to charge the battery was significantly reduced.

However, although an amount of time used for charging is reduced with the driving range issue, there still remains the insufficient spread issue of charging stations for charging batteries of electric vehicles. Electric vehicle users travel to distant areas to visit charging stations that are insufficient compared to the spread of electric vehicles. Although electric vehicle users visit a charging station, another user may be using a charger. In this case, the electric vehicle users have no choice but to wait for the other user to complete using the charger. That is, the issue of electric vehicle users using a charging station may still remain unsolved.

### DETAILED DESCRIPTION

### TECHNICAL SUBJECT

The present disclosure is conceived in response to the aforementioned related art and provides a method of determining a charging station such that a user may conveniently charge a battery of a moving object.

The technical subjects of the present disclosure are not limited to the aforementioned technical subjects and other technical subjects not described herein may be clearly understood by one of ordinary skill in the art from the following description.

### SOLUTION

According to an example embodiment of the present disclosure to solve the aforementioned subjects, a charging station determining method performed by a battery scheduling device that performs scheduling for battery operation of a moving object may include, when a specific condition is satisfied, determining a movement range indicating a range within which the moving object is movable from a current location of the moving object based on the current location and a state of charge (SOC) of the battery; determining at least one charging station present within the movement range; and determining a first charging station among the at least one charging station based on predetermined preference information of a user and information related to the at least one charging station.

Also, the specific condition may include a first condition satisfied when an input for requesting a search for a charging station is received from the user of the moving object or a second condition satisfied when a residual amount of the battery is less than a preset threshold.

Also, the preference information may be predetermined based on at least one of first weight information indicating a weight for charging cost input from the user, second weight information indicating a weight for presence or absence of an available charging port input from the user, third weight information indicating a weight for performance of a charging port input from the user, and fourth weight information indicating a weight for a travel distance input from the user.

Also, the preference information may be predetermined based on at least one of first cost information about the average charging cost of at least one second charging station used by the user, reservation information indicating whether the user has reserved and used an unavailable charging port at the at least one second charging station, first charging port performance information about the average performance of a charging ports used by the user at the at least one second charging station, and first travel distance information about the average travel distance moved by the user to visit the at least one second charging station.

Also, the information related to the at least one charging station may include at least one of second cost information about charging cost of the at least one charging station, first available charging port information indicating whether an available charging port is present within the at least one charging station, second charging port performance information about performance of a charging port present within the at least one charging station, and second travel distance information about a travel distance to the at least one charging station.

Also, the determining the movement range indicating the range within which the moving object is movable from the current location of the moving object based on the current location and the state of charge (SOC) of the battery may include determining the movement range based on the current location of the moving object, the state of charge of the battery, and information related to performance of the moving object, and the information related to the performance of the moving object may include at least one of information about the average fuel efficiency of the moving object provided from the manufacturer of the moving object, information about the maximum fuel efficiency of the moving object provided from the manufacturer, information about the minimum fuel efficiency of the moving object provided from the manufacturer, information about the actual average fuel efficiency according to recent driving of the moving object, information about the actual maximum fuel efficiency of the moving object, and information about the actual minimum fuel efficiency of the moving object.

Also, the determining the movement range indicating the range within which the moving object is movable from the current location of the moving object based on the current location and the state of charge (SOC) of the battery may include determining the movement range based on the current location of the moving object, the state of charge of the battery, and information about surrounding streets of the current location, and the information about the surrounding streets may include at least one of information related to elevation of the surrounding streets, information related to slope of the surrounding streets, information related to vehicle congestion in the surrounding streets, information related to freeway present within the surrounding streets, and information related to national highway present within the surrounding streets.

Also, the determining the movement range indicating the range within which the moving object is movable from the current location of the moving object based on the current location and the state of charge (SOC) of the battery may include determining the movement range based on the current location of the moving object, the state of charge of the battery, information related to the performance of the moving object, and information about streets around the current location.

Also, the method may further include when the first charging station is determined, displaying information related to the first charging station, and the information related to the first charging station may include at least one of third cost information about charging cost of the first charging station, second available charging port information indicating whether an available charging port is present within the first charging station, third charging port performance information about performance of a charging port present within the first charging station, third travel distance information about a travel distance to the first charging station, a first route indicating a route from the current location to the first charging station, and pass information indicating whether a pass held by the user is available at a charging station.

Also, the information related to the first charging station may include an indicator for reserving use of the first charging station, and the method may further include, after displaying the information related to the first charging station, receiving input for reserving the use of the first charging station from the user; and reserving the use of the first charging station based on the input.

Also, the receiving the input for reserving the use of the first charging station from the user may include receiving an input for selecting a first charging port from among at least one charging port present within the first charging station from the user; and receiving an input for an estimated arrival time at which the moving object arrives at the first charging station.

Also, the determining the first charging station among the at least one charging station may include inputting the preference information of the user and the information related to the at least one charging station to a neural network model trained to determine a customized charging station from preference information of users and information related to charging stations, and determining the first charging station among the at least one charging station.

Also, a battery scheduling device for performing scheduling for battery operation of a moving object may include a controller configured to when a specific condition is satisfied, determine a movement range indicating a range within which the moving object is movable from a current location of the moving object based on the current location and a state of charge (SOC) of the battery, to determine at least one charging station present within the movement range, and to determine a first charging station among the at least one charging station based on predetermined preference information of a user and information related to the at least one charging station.

Also, a charging station determining method performed by a server that performs scheduling for battery operation of a moving object may include when a specific condition is satisfied, determining a movement range indicating a range within which the moving object is movable from a current location of the moving object based on the current location and a state of charge (SOC) of the battery; determining at least one charging station present within the movement range; and determining a first charging station among the at least one charging station based on predetermined preference information of a user and information related to the at least one charging station.

The technical solutions obtainable from the present disclosure are not limited to the aforementioned solutions and other solutions not described herein may be clearly understood by one of ordinary skill in the art from the following description.

### EFFECT

According to some example embodiments of the present disclosure, it is possible to provide a method for determining a charging station such that a user may conveniently charge a battery of a moving object.

The effects obtainable from the present disclosure are not limited to the aforementioned effects and other effects not described herein may be clearly understood by one of ordinary skill in the art from the following description.

### BRIEF DESCRIPTION OF DRAWINGS

Various aspects are described with reference to the accompanying drawings and, herein, like reference numerals refer to like elements throughout. In the following example embodiments, numerous specific details are set forth herein to provide thorough understanding of at least one aspect for the purpose of explanation. However, it will be apparent that such aspect(s) may be practiced without the specific details. In other examples, known structures and devices are illustrated in a form of a block diagram to easily describe at least one aspect:
FIG. 1 is a diagram illustrating an example of a system for performing a method for determining a charging station according to some example embodiments of the present disclosure.
FIG. 2 is a flowchart illustrating an example of a method of providing, by a battery scheduling device, a route according to some example embodiments of the present disclosure.
FIG. 3 is a flowchart illustrating an example of a method of determining, by a battery scheduling device, a first route among at least one candidate route according to some example embodiments of the present disclosure.
FIG. 4 is a flowchart illustrating another example of a method of determining, by a battery scheduling device, a first route among at least one candidate route according to some example embodiments of the present disclosure.
FIG. 5 is a flowchart illustrating an example of a method of determining, by a battery scheduling device, a first route based on whether a user-customized charging station is present according to some example embodiments of the present disclosure.
FIG. 6 is a flowchart illustrating an example of a method of determining, by a battery scheduling device, a first route based on a location of a user-customized charging station according to some example embodiments of the present disclosure.
FIG. 7 is a flowchart illustrating an example of determining, by a battery scheduling device, a first charging station according to some example embodiments of the present disclosure.
FIG. 8 is a flowchart illustrating an example of a method of reserving, by a battery scheduling device, a first charging station according to some example embodiments of the present disclosure.

### BEST MODE

Various modifications and changes may be made to the present invention and the present invention may include various example embodiments. Specific example embodiments are described in detail with reference to the accompanying drawings. The example embodiments, however, may be embodied in various different forms, and should not be construed as being limited to only the specific example embodiments. Rather, the example embodiments should be understood to include all of the modifications, equivalents, and substitutions included in the spirit and technical scope of the present invention. Like reference numerals refer to like elements throughout to describe each drawing.

Although the terms "first," "second," "A," "B," etc., may be used herein to describe various components, the components should not be limited by these terms. These terms are only used to distinguish one component from another component. For example, a first component may also be termed a second component and, likewise, a second component may be termed a first component, without departing from the scope of this invention. As used herein, the term "and/or" includes any and all combinations of one or more of the associated listed items.

When a component is referred to as being "connected to" or "accessed to" another component, the component may be directly connected to or accessed to the other component, or one or more other intervening components may be present. In contrast, when a component is referred to as being "directly connected to" or "directly accessed to," there is no intervening component.

The terms used herein are used to simply explain specific example embodiments and are not construed to limit the present invention. The singular forms "a," "an," and "the," are intended to include the plural forms as well, unless the context clearly indicates otherwise. It will be further understood that the terms "comprises/comprising (incudes/including)," and "has/having" when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which the present invention belongs. Terms, such as those defined in commonly used dictionaries, should be interpreted as having a meaning that is consistent with their meaning in the context of the relevant art and/or this invention, and should not be interpreted in an idealized or overly formal sense unless expressly so defined herein.

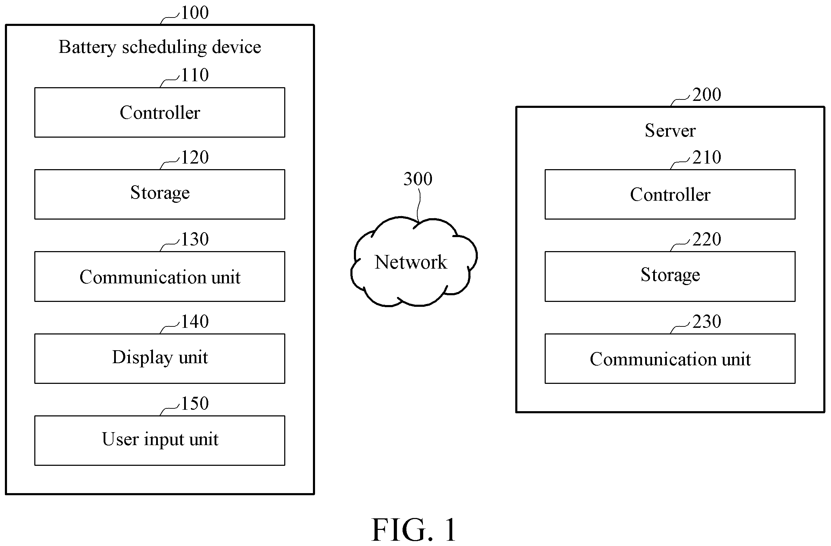

**In** the present disclosure, when an input of a destination is received from a user, a battery scheduling device may provide a route to the destination. Here, the battery scheduling device may be a computing device or a user terminal provided to a moving object. The moving object may be various movement methods including an electric vehicle or an electric motorcycle. When determining the route to the destination based on the input from the user, the battery scheduling device may determine the route based on a state of charge (SOC) of a battery. Here, the state of charge of the battery may include information related to a quantitative value indicating the degree to which a battery is charged, a quantitative value indicting the degree to which the battery is currently consumed, or a quantitative value indicating a charge amount currently remaining in the battery. The battery scheduling device may determine the route to the destination based on the state of charge of the battery, a current location of the moving object, and a distance to the destination. When the battery scheduling device determines that the moving object may not move to the destination based on the state of charge of the battery and the distance to the destination, the battery scheduling device may determine a charging station for charging the battery. Alternatively, the battery scheduling device may receive an input for searching for a charging station from the user and accordingly, may determine the charging station. Hereinafter, a method of determining, by the battery scheduling device, a charging station is described with reference to FIGS. 1 to 8.

FIG. 1 is a diagram illustrating an example of a system for performing a method for determining a charging station according to some example embodiments of the present disclosure.

Referring to FIG. 1, a battery scheduling device 100 may include a controller 110, a storage 120, a communication unit 130, a display unit 140, and a user input unit 150. However, the aforementioned components are not essential to implement the battery scheduling device 100, so the battery scheduling device 100 may include more or fewer components than the components listed above.

The battery scheduling device 100 may be a navigation device provided to a vehicle or a user terminal owned by the user. The battery scheduling device 100 may include any type of a computer system or a computer device, for example, a microprocessor, a digital processor, and a device controller.

The controller 110 may typically process the overall operation of the battery scheduling device 100. The controller 110 may provide appropriate information or functions to the user by processing signals, data, and information input or output through the components of the battery scheduling device 100, or by driving an application program stored in the storage 120.

The controller 110 may include at least one core, and may include a processor for data analysis, such as a central processing unit (CPU), a general purpose graphics processing unit (GPGPU), and a tensor processing unit (TPU).

In the present disclosure, the controller 110 may receive an input of a destination from the user through the user input unit 150. When the destination is received, the controller 110 may determine a current location of a moving object and a state of charge (SOC) of a battery of the moving object. Here, the state of charge of the battery may include information related to a quantitative value indicating the degree to which the battery is charged, a quantitative value indicting the degree to which the battery is currently consumed, or a quantitative value indicating a charge amount currently remaining in the battery. When the state of charge of the battery is determined, the controller 110 may determine a first route indicating a route to the destination based on the destination, the current location of the moving object, and the state of charge of the battery.

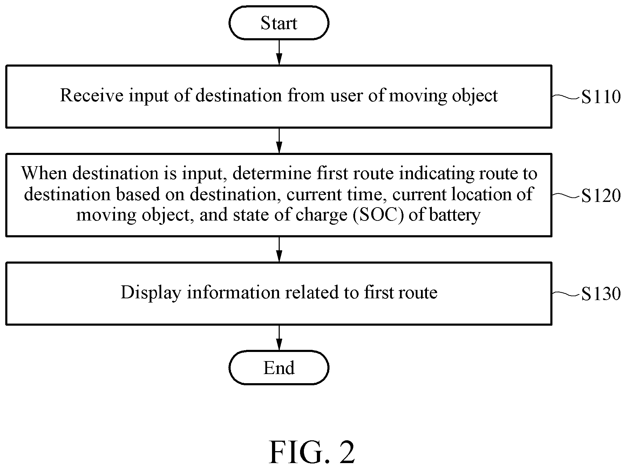

For example, the controller 110 may determine at least one candidate route indicating the route from the current location to the destination based on the destination and the current location of the moving object. The controller 110 may determine a first driving range of each of the at least one candidate route and a second driving range in which the moving object may drive. The controller 110 may determine the second driving range based on the state of charge of the battery. The controller 110 may compare the first driving range and the second driving range and may determine a candidate route having the first driving range shorter than the second driving range as the first route. When the first route is determined, the display unit 140 may display information related to the first route. Hereinafter, a method of determining, by the controller 110, the first route is described with reference to FIG. 2.

The storage 120 may include a memory and/or permanent storage medium. The memory may include at least one type of storage medium among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disc, and an optical disc.

The communication unit 130 may include at least one module that enables communication between the battery scheduling device 100 and a communication system, between the battery scheduling device 100 and the server 200, or between the battery scheduling device 100 and a network 300.

The display unit 140 may display (output) information (or at least one piece of content) processed by the battery scheduling device 100. For example, the display unit 140 may display execution screen information of an application program that runs in the battery scheduling device 100 or user interface (UI) and graphic user interface (GUI) information according to the execution screen information. For example, the display unit 140 may display the first route determined from the controller 110.

The user input unit 150 may receive an input from the user for controlling the battery scheduling device 100. For example, the user input unit may be implemented as at least one of a key pad, a dome switch, a touch pad (static pressure/electrostatic), a jog wheel, and a jog switch. Depending on example embodiments, when the display unit 140 includes the touch pad capable of receiving a touch input from the user, the user input unit 150 may be the same module as the display unit 140 or a module included in the display unit 140.

The server 200 may include a controller 210, a storage 220, and a communication unit 230. However, the components are not essential to implement the server 200, so the server 200 may include more or fewer components than the components listed above.

The server 200 may include any type of a computer system or a computer device, for example, a microprocessor, a main frame computer, a digital processor, a portable device, and a device controller.

**In** the present disclosure, the server 200 may receive an input of a destination from the battery scheduling device 100. When the input of the destination is received, the server 200 may determine a first route to the destination based on a current location of the moving object. The server 200 may transmit the determined first route to the battery scheduling device 100. **In** other words, the aforementioned operation performed by the battery scheduling device 100 may also be performed through the server 200.

According to some example embodiments of the present disclosure, the server 200 may receive a signal for purchasing a pass available at a charging station from the battery scheduling device 100 of the moving object. Here, the pass may be an online ticket, a mobile ticket, and a coupon that allows the user to charge a battery of the moving object at the charging station. The pass may include a use condition for using the charging station. For example, the pass may include at least one of a first condition indicating at least one charging station at which the pass is available, a second condition indicating a charging port available through the pass among at least one charging port provided to the at least one charging station, a third condition indicating charging cost for using a charging port, a fourth condition indicating performance of the charging port, and a fifth condition indicating an available time section of the charging port. When the signal for purchasing the pass is received, the server 200 may transmit use condition information about a use condition and information about purchase cost for purchasing the pass to the moving object, causing the user to purchase the pass.

The controller 210 may typically process the overall operation of the server 200. The controller 210 may provide, to the battery scheduling device 100, or process appropriate information or functions by processing signals, data, and information input or output through the components of the server 200, or by driving an application program stored in the storage 220.

The controller 210 may include at least one core, and may include a processor for data analysis, such as a central processing unit (CPU), a general purpose graphics processing unit (GPGPU), and a tensor processing unit (TPU).

The storage 220 may include a memory and/or permanent storage medium. The memory may include at least one type of storage medium among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disc, and an optical disc.

The communication unit 230 may include at least one module that enables communication between the server 200 and a communication system, between the server 200 and the battery scheduling device 100, or between the server 200 and the network 300.

The network 300 may be configured regardless of a communication mode such as wired and wireless modes and may be configured using various communication networks such as a short-distance communication network (e.g., local rea network (LAN)) and long-distance communication network (e.g., wide area network (WAN)).

Hereinafter, a method of providing, by the battery scheduling device 100, a route based on a destination input from the user is described with reference to FIG. 2.

FIG. 2 is a flowchart illustrating an example of a method of providing, by a battery scheduling device, a route according to some example embodiments of the present disclosure.

Referring to FIG. 2, the battery scheduling device 100 may receive an input of a destination from the user of the moving object through the user input unit 150 (S110).

When the destination is received, the controller 110 may determine a first route indicating a route to the destination based on the destination, a current time, a current location of the moving object, and a state of charge (SOC) of a battery (S120). Determining the first route may be understood as scheduling the route. Scheduling the first route may also be understood as scheduling whether to visit a charging station, whether to pass through a transit point, or a time to arrive at the destination in order for the moving object to move from the current location to the destination.

The first route may be a route from the current location to the destination. The state of charge of the battery may include information related to a quantitative value indicating the degree to which the battery is charged, a quantitative value indicting the degree to which the battery is currently consumed, or a quantitative value indicating a charge amount currently remaining in the battery. The destination may be a value input from the user. The current time may be a time at which the destination is input, and the current location may be the current location of the moving object. Depending on example embodiments, the user may enter an input for searching for a route from a first location to the destination rather than the route from the current location to the destination. **In** this case, the first route indicating the route to the destination may be determined based on the first location instead of the current location.

**In** the present disclosure, a plurality of first routes may be present. For example, the first route may include at least one of a shortest time route capable of reaching the destination in the shortest time from the current location, a shortest distance route capable of reaching the destination in the shortest distance from the current location, a toll road route in which a toll road is present while reaching the destination from the current location, and a toll-free road route in which a toll road is absent while reaching the destination from the current location. Hereinafter, a specific method of determining the shortest time route, the shortest distance route, the toll road route, and the toll-free road route may employ conventional navigation-related technology and thus, further description is omitted.

According to some example embodiments of the present disclosure, the controller 110 may determine at least one candidate route indicating a route from the current location to the destination to determine the first route. Here, at least one candidate route may not be a route provided to the user. At least one candidate route may be a route temporarily determined to determine the first route to be provided to the user. The controller 110 may determine a first driving range of each of the at least one candidate route. The controller 110 may determine a second driving range in which the moving object may drive based on the state of charge of the battery. The controller 110 may determine the first route among the at least one candidate route based on the first driving range and the second driving range.

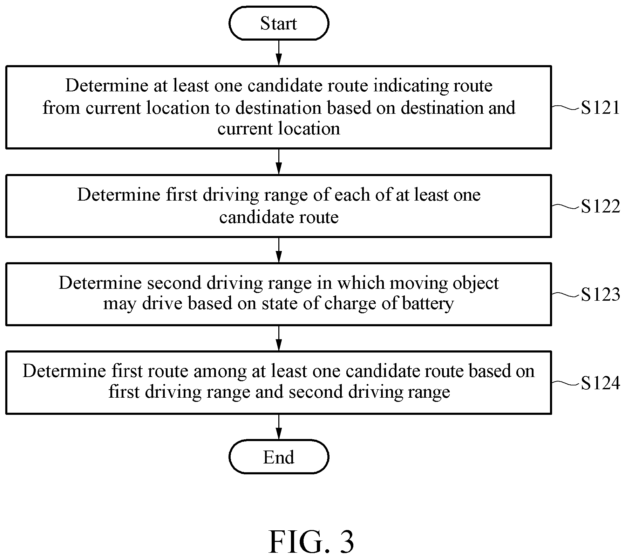

For example, the controller 110 may determine a candidate route having the first driving range shorter than the second driving range as the first route. Hereinafter, an example of determining, by the controller 110, the candidate route having the first driving range shorter than the second driving range as the first route is described with reference to FIG. 3.

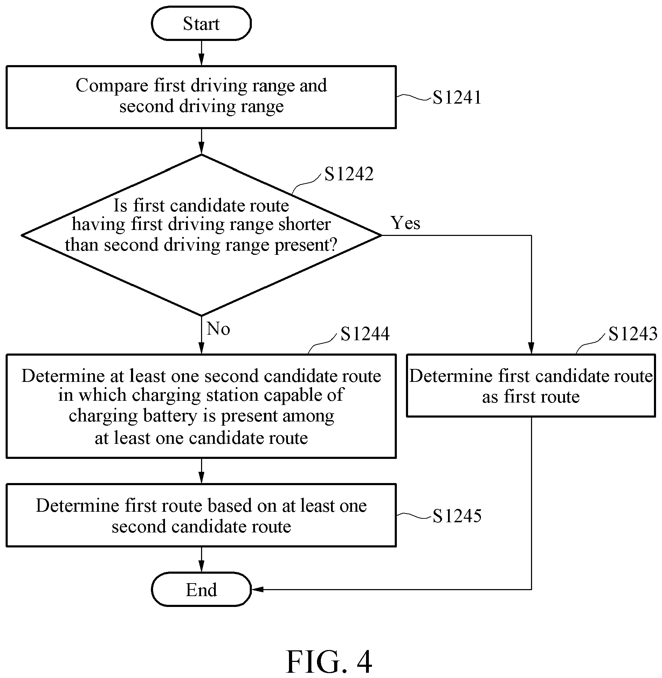

According to some example embodiments of the present disclosure, the controller 110 may determine that the candidate route having the first driving range shorter than the second driving range is absent. In this case, the controller 110 may determine a candidate route in which a charging station capable of charging a battery is present among the candidate routes as the first route. Hereinafter, an example of determining, by the controller 110, a candidate route in which the charging station is present as the first route is described with reference to FIG. 4.

The display unit 140 may display information related to the first route (S130). Here, the information related to the first route may include the first route and an amount of time used to reach the destination through the first route.

According to some example embodiments of the present disclosure, the first route may include the charging station for charging the battery of the moving object on the route. When the first route including the charging station is determined, the controller 110 may determine a first amount of time required to charge the battery at the charging station. For example, the controller 110 may determine the first amount of time required to charge the battery based on performance of a charging port provided to the charging station and the state of charge of the battery. When the first amount of time required is determined, the controller 110 may determine a total amount of time required based on the first amount of time required and a second amount of time required for the moving object to reach the destination through the first route. Here, the second amount of time required may be determined based on the current time and the first route to the destination. When the total amount of time required is determined, the display unit 140 may display the determined total amount of time required and the first route.

According to the aforementioned configuration, the battery scheduling device 100 may determine the first route indicating the route to the destination based on the destination input from the user, the current time, the current location of the moving object, and the state of charge of the battery. Depending on example embodiments, the first route may be a route having the first driving range shorter than the second driving range in which the moving object may drive. Therefore, when the first route is provided, the user may conveniently move to the destination without worrying about the battery. According to another example embodiment, when it is determined that it is impossible for the moving object to reach the destination, the controller 110 may determine the first route in which a charging station capable of charging the battery is present. Therefore, the user may conveniently visit the charging station without a need to leave the first route to charge the battery.

According to some example embodiments of the present disclosure, the battery scheduling device 100 may determine at least one candidate route indicating the route from the current location to the destination. The battery scheduling device 100 may determine the first route among the at least one candidate route based on the state of charge of the battery. Hereinafter, an example of a method of determining, by the battery scheduling device 100, the first route among at least one candidate route is described with reference to FIG. 3.

FIG. 3 is a flowchart illustrating an example of a method of determining, by a battery scheduling device, a first route among at least one candidate route according to some example embodiments of the present disclosure.

Referring to FIG. 3, the controller 110 of the battery scheduling device 100 may determine at least one candidate route indicating a route from the current location to the destination based on the destination and the current location (S121). Here, the at least one candidate route may not be a route provided to the user. The at least one candidate route may be a route temporarily determined to determine the first route to be provided to the user.

The controller 110 may determine a first driving range of each of the at least one candidate route (S122). The controller 110 may determine a second driving range in which the moving object may drive, based on a state of charge of a battery (S123).

According to some example embodiments of the present disclosure, the controller 110 may determine the second driving range based on the state of charge of the battery and information related to performance of the moving object. Here, the information related to the performance of the moving object may include at least one of information about the average fuel efficiency of the moving object provided from the manufacturer of the moving object, information about the maximum fuel efficiency of the moving object provided from the manufacturer, information about the minimum fuel efficiency of the moving object provided from the manufacturer, information about the actual average fuel efficiency according to recent driving of the moving object, information about the actual maximum fuel efficiency according to recent driving of the moving object, and information about the actual minimum fuel efficiency according to recent driving of the moving object.

For example, the controller 110 may determine the second driving range based on the state of charge of the battery and information about the average fuel efficiency of the moving object provided from the manufacturer of the moving object. As another example, the controller 110 may determine the second driving range based on the state of charge of the battery and information about the maximum fuel efficiency of the moving object provided from the manufacturer. As still another example, the controller 110 may determine the second driving range based on the state of charge of the battery and information about the minimum fuel efficiency of the moving object provided from the manufacturer. As still another example, the controller 110 may determine the second driving range based on the state of charge of the battery and information about the actual average fuel efficiency according to recent driving of the moving object. As still another example, the controller 110 may determine the second driving range based on the state of charge of the battery and information about the actual maximum fuel efficiency according to recent driving of the moving object. As still another example, the controller 110 may determine the second driving range based on the state of charge of the battery and information about the actual minimum fuel efficiency according to recent driving of the moving object.

According to some example embodiments of the present disclosure, the controller 110 may determine the second driving range based on the state of charge of battery and information about surrounding streets of the current location. Here, the information about the surrounding streets may include at least one of information related to elevation of the surrounding streets, information related to slope of the surrounding streets, information related to vehicle congestion in the surrounding streets, information related to freeway present within the surrounding streets, and information related to national highway present within the surrounding streets.

In the case of an electric vehicle according to the technical field of the present disclosure, battery consumption may rapidly change depending on the user's driving habits or surrounding environment. Even in the case of vehicles using internal combustion engines, there may be some differences in fuel efficiency depending on the user's driving habits or surrounding environment. However, in the case of electric vehicles, there may be clear differences in fuel efficiency. Also, in the case of electric vehicles, there may be clear differences in fuel efficiency depending on surrounding road conditions. Therefore, the controller 110 may determine the second driving range based on the state of charge of the battery, information related to the performance of the moving object, and information about the streets around the current location.

When the second driving range is determined, the controller 110 may determine the first route among the at least one candidate route based on the first driving range and the second driving range (S124).

In detail, the controller 110 may compare the first driving range and the second driving range. The controller 110 may determine a first candidate route having the first driving range shorter than the second driving range as the first route. Therefore, the user may conveniently move to the destination without worrying about the battery.

According to some example embodiments of the present disclosure, the controller 110 may determine that the first candidate route having the first driving range shorter than the second driving range is absent. In this case, the controller 110 may determine the first route based on at least one second candidate route in which a charging station capable of charging the battery is present among the at least one candidate route. Hereinafter, another example of a method of determining, by the controller 110, the first route among the at least one candidate route is described with reference to FIG. 4.

FIG. 4 is a flowchart illustrating another example of a method of determining, by a battery scheduling device, a first route among at least one candidate route according to some example embodiments of the present disclosure.

Referring to FIG. 4, the controller 110 of the battery scheduling device 100 may compare the first driving range of each of at least one candidate route and the second driving range in which the moving object may drive (S1241).

When the first candidate route having the first driving range shorter than the second driving range is present (S1242, Yes), the controller 110 may determine the first candidate route as the first route (S1243). In this case, the display unit 140 may display information related to the first route.

For example, the display unit 140 may display the first route and an amount of time required to reach the destination through the first route.

When the first candidate route having the first driving range shorter than the second driving range is absent (S1242, No), the controller 110 may determine at least one second candidate route in which a charging station capable of charging the battery is present among the at least one candidate route (S1244). Here, the charging station may be a charging station present at a distance shorter than the second driving range in which the moving object may drive.

In detail, the controller 110 may determine at least one candidate route in which the charging station capable of charging the battery is present. When the at least one candidate route is determined, the controller 110 may determine the current location and a driving range to the charging station present in the at least one candidate route. The controller 110 may determine at least one candidate route of which driving range to the charging station is shorter than the second driving range among the at least one candidate route. The controller 110 may determine at least one candidate route of which driving range to the charging station is shorter than the second driving range as the second candidate route.

According to some example embodiments of the present disclosure, the controller 110 may determine at least one second candidate route in which a plurality of charging stations are present.

For example, it may be impossible for the moving object to move from its current location to its destination with single battery charge. For example, the driving range from Seoul station to Busan station may be 400 km. In the case of some electric vehicles, the actual driving distance may be only around 200 km. Therefore, the controller 110 may determine at least one second candidate route in which the plurality of charging stations are present on the route.

When the at least one second candidate route is determined, the controller 110 may determine the first route based on the at least one second candidate route (S1245). For example, the controller 110 may determine the second candidate route having the shortest distance among the at least one second candidate route as the first route. As another example, the controller 110 may determine the second candidate route through which the moving object may reach the destination in the shortest time among the at least one second candidate route as the first route. As still another example, the controller 110 may determine the second candidate route having the closest distance to the charging station among the at least one second candidate route as the first route.

According to the aforementioned configuration, when it is determined that it is impossible for the moving object to drive to the destination, the battery scheduling device 100 may determine the first route based on the at least one second candidate route in which the charging station is present. Therefore, the user may conveniently charge the battery of the moving object while moving to the destination.

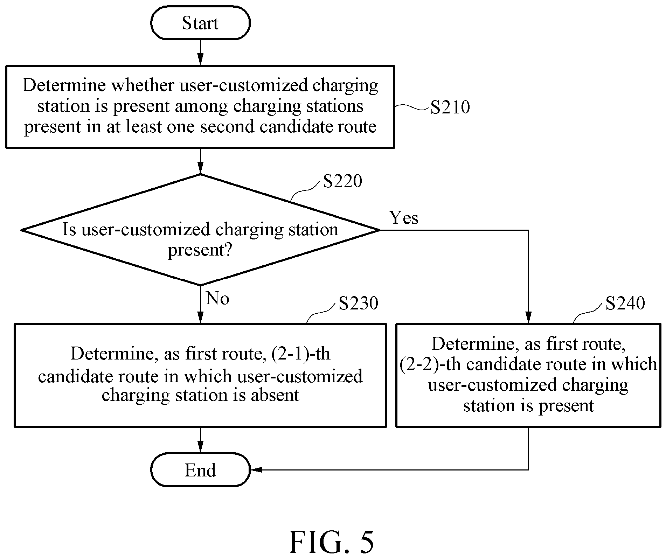

According to some example embodiments of the present disclosure, the battery scheduling device 100 may determine whether a user-customized charging station is present among charging stations present in the at least one second candidate route. Here, the user-customized charging station may include at least one of a charging station preset by the user, a charging station at which a pass held by the user is available, and a charging station visited by the moving object a preset number of times or more. The battery scheduling device 100 may determine a candidate route in which the user-customized charging station is present among the at least one second candidate route as the first route. Hereinafter, a method of determining, by the battery scheduling device 100, the first route based on whether the user-customized charging station is present is described with reference to FIG. 5.

FIG. 5 is a flowchart illustrating an example of a method of determining, by a battery scheduling device, a first route based on whether a user-customized charging station is present according to some example embodiments of the present disclosure.

Referring to FIG. 5, the controller 110 of the battery scheduling device 100 may determine whether a user-customized charging station is present among charging stations present in at least one second candidate route (S210).

Here, the user-customized charging station may include at least one of a charging station preset by the user of the moving object, a charging station at which a pass held by the user is available, and a charging station visited by the moving object a preset number of times or more. The pass may be an online ticket, a mobile ticket, and a coupon that allows the user to charge a battery of the moving object at the charging station. The pass may include a use condition for using the charging station. For example, the pass may include a condition indicating an available charging station among the plurality of charging stations.

According to some example embodiments of the present disclosure, the user-customized charging station may be determined based on predetermined preference information of the user. Here, the preference information may be information indicating the user's propensity of using a charging station. Alternatively, the preference information may be information indicating the user's habits of using a charging station. The preference information may be information indicating whether the user is a type that focuses on stability of battery charging or a second type that focuses on charging cost of the battery. The preference information may be determined based on a weight input in advance from the user.

**In** detail, the preference information may include first weight information indicating a weight for the charging cost input from the user. The first weight information may be information indicating how much the user considers the charging cost. For example, the weight for the charging cost may be 1 to 5 points. The user may enter 5 points if the user desires low charging cost. The user may enter 5 points if the user desires low charging cost although a distance to the charging station is somewhat far. The user may enter 1 point if the user desires excellent performance of a charging port or desires to minimize a waiting time to use the charging port, although the charging cost is somewhat expensive. Alternatively, the user may enter 1 point if the user desires close distance to a charging station although the charging cost is somewhat expensive.

The preference information may include second weight information indicating a weight for presence or absence of an available charging port input from the user. The second weight information may be information indicating how much the user considers presence or absence of an available charging port. For example, the weight for presence or absence of an available charging port may be 1 to 5 points. The available charging port may be a charging port that may be used immediately when the user visits the charging station. Conversely, an unavailable charging port may be a charging port that is used by another user and has a waiting time for use although the user visits the charging station. The user may enter 1 point if the user desires low charging cost although there is some waiting time due to absence of the available charging port. The user may enter 5 points if the user desires to visit only a charging station with an available charging port although the charging cost is somewhat expensive.

The preference information may include third weight information indicating a weight for performance of a charging port input from the user. The third weight information may be information indicating how much the user considers the performance of the charging port. For example, the weight for the performance of the charging port may be 1 to 5 points. The performance of the charging port may affect an amount of time required to charge the battery of the moving object. The user may enter 5 points if the user desires excellent performance of the charging port. The user may enter 1 point if the user does not greatly consider the performance of the charging port.

The preference information may include fourth weight information indicating a weight for a travel distance input from the user. The fourth weight information may be information indicating how much the user considers a travel distance the user needs to travel to visit the charging station. The user may enter 1 point if the user does not mind the distance to the charging station as long as the charging cost is low. The user may enter 5 points if the user desires a short travel distance to the charging station although the charging cost is somewhat expensive. The controller may predetermine the preference information of the user based on at least one of the aforementioned first weight information to fourth weight information. The aforementioned examples are provided to assist understanding of the description and weight scores are not limited thereto.

According to some example embodiments of the present disclosure, the controller 110 may determine the preference information of the user through a first neural network model trained to determine the preference information of the user from the weight information. The first neural network model may be a network model based on convolutional neural networks (CNN), artificial neural network (ANN), deep neural network (DNN), or recurrent neural network (RNN). The first neural network model may be a model that outputs the preference information of the user when the first weight information to the fourth weight information is input. Hereinafter, the first neural network model may use the conventional network models and further description is omitted.

When the user-customized charging station is absent (S220, No), the controller 110 may determine, as the first route, a (2-1)-th candidate route in which the user-customized charging station is absent (S220). In other words, the controller 110 may determine, as the first route, the (2-1)-th candidate route in which the user-customized charging station is absent, but the charging station is present.

When the user-customized charging station is present (S220, Yes), the controller 110 may determine the first route based on a (2-2)-th candidate route in which the user-customized charging station is present (S230).

For example, the controller 110 may determine, as the first route, the (2-2)-th candidate route in which the user-customized charging station is present.

According to the aforementioned configuration, the battery scheduling device 100 may determine the first route based on whether the user-customized charging station is present. Depending on example embodiments, the user-customized charging station may include a charging station preset by the user due to convenience for use or a charging station at which a pass held by the user is available. Therefore, when the battery scheduling device 100 provides the first route in which the user-customized charging station is present to the user, the user may move to the destination while conveniently using a charging station that the user normally uses. According to another example embodiment, the user-customized charging station may also be determined based on the preference information of the user. Therefore, although the charging station that the user normally uses is absent in the first route, the battery scheduling device 100 may provide the first route in which a charging station similar to the charging station that the user normally uses is present. Therefore, the user may travel to the destination while conveniently using the charging station determined according to the preference of the user.

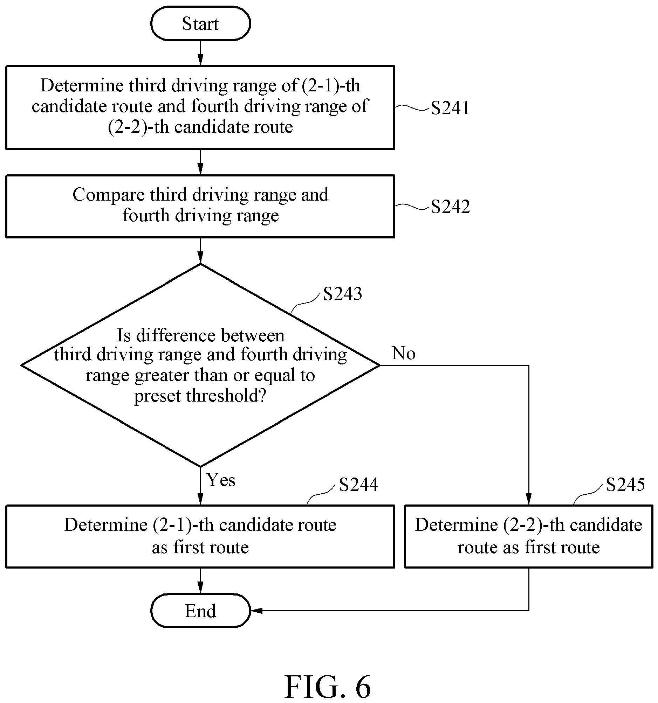

According to some example embodiments of the present disclosure, the battery scheduling device 100 may determine the first route based on a location of the user-customized charging station. Hereinafter, an example of determining, by the battery scheduling device 100, the first route based on the location of the user-customized charging station is described with reference to FIG. 6.

FIG. 6 is a flowchart illustrating an example of a method of determining, by a battery scheduling device, a first route based on a location of a user-customized charging station according to some example embodiments of the present disclosure.

Referring to FIG. 6, the controller 110 of the battery scheduling device 100 may determine a third driving range of the (2-1)-th candidate route and a fourth driving range of the (2-2)-th candidate route (S241). Here, the (2-1)-th candidate route may be a candidate route in which the user-customized charging station is absent and only the charging station is present. The (2-2)-th candidate route may be a candidate route in which the user-customized charging station is present.

The controller 110 may compare the third driving range and the fourth driving range (S242).

When a difference between the third driving range and the fourth driving range is greater than or equal to a preset threshold as comparison result (S243, Yes), the controller 110 may determine the (2-1)-th candidate route as the first route (S244).

For example, the third driving range may be 100 km, and the fourth driving range may be 110 km. The preset threshold may be 5 km. Since a difference between the third driving range and the fourth driving range is greater than or equal to the preset threshold, the controller 110 may determine the (2-1)-th candidate route as the first route. That is, the controller 110 may determine, as the first route, the (2-1)-th candidate route in which the user-customized charging station is absent and only the charging station is present.

When the difference between the third driving range and the fourth driving range is less than the preset threshold as comparison result (S243, No), the controller 110 may determine the (2-2)-th candidate route as the first route (S245).

For example, the third driving range may be 100 km, and the fourth driving range may be 102 km. The preset threshold may be 5 km. Since the difference between the third driving range and the fourth driving range is less than the preset threshold, the controller 110 may determine the (2-2)-th candidate route as the first route. That is, the controller 110 may determine, as the first route, the (2-2)-th candidate route in which the user-customized charging station is present.

Although a user-customized rest area is present, a distance from the current location of the moving object to the user-customized rest area may be rather distant. In this case, the user may be burdened by selecting a long route to visit the user-customized rest area. Therefore, the controller 110 may determine the first route based on the location of the user-customized charging station.

According to some example embodiments of the present disclosure, the preset threshold may be determined based on an input from the user. For example, the controller 110 may receive an input of the threshold in advance from the user through the user input unit 150. As another example, the controller 110 may determine the threshold based on preference information. For example, the preference information may include fourth weight information indicating a weight for travel distance. The controller 110 may determine the threshold based on the fourth weight information.

According to the aforementioned configuration, the battery scheduling device 100 may determine the first route based on the location of the user-customized charging station. If a driving range difference between a route in which the user-customized charging station is present and a route in which the user-customized charging station is absent is less than the threshold, the battery scheduling device 100 may provide the user with the route in which the user-customized charging station is present. Alternatively, if the driving range difference between the route in which the user-customized charging station is present and the route in which the user-customized charging station is absent is greater than or equal to the threshold, the battery scheduling device 100 may provide the user with the route in which the user-customized charging station is absent. In this manner, the user may be provided with a best route to the destination.

According to some example embodiments of the present disclosure, when an input for searching for a charging station is received from the user, the battery scheduling device 100 may determine the charging station based on a state of charge of a battery.

In the case of internal combustion engine vehicles, charging stations for charging gasoline or diesel fuel are widely available. However, in the case of electric vehicles, charging stations for charging batteries are not yet widely available. Therefore, the user may consider which charging station is best to visit at a current location. Hereinafter, a method of determining, by the battery scheduling device 100, a charging station based on an input from the user is described.

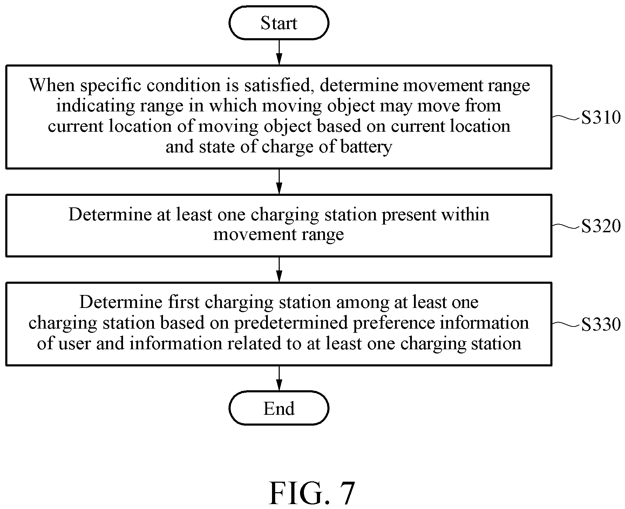

FIG. 7 is a flowchart illustrating an example of determining, by a battery scheduling device, a first charging station according to some example embodiments of the present disclosure.

Referring to FIG. 7, when a specific condition is satisfied, the controller 110 of the battery scheduling device 100 may determine a movement range indicating a range in which the moving object may move from a current location of the moving object based on the current location and a state of charge of a battery (S310).

The specific condition may include a first condition satisfied when an input for requesting a search for a charging station is received from the user of the moving object. When the input for requesting the search for the charging station is received from the user and the first condition is satisfied, the controller 110 may determine the movement range.

The specific condition may include a second condition satisfied when a residual amount of the battery is less than a preset threshold. For example, the preset threshold may be 20%. If it is determined that the residual amount of the battery is less than 20% based on the state of charge of the battery, the controller 110 may determine that the second condition is satisfied. As it is determined that the second condition is satisfied, the controller may determine the movement range. Depending on example embodiments, when the second condition is satisfied, the controller 110 may provide a visual notification for charging the battery to the user through the display unit 140. Alternatively, the controller 110 may provide an auditory notification for charging the battery to the user. The movement range may be generated around the current location of the moving object.

Depending on example embodiments, the current location may be replaced with map data. In this case, the controller 110 may determine the movement range based on the map data. Here, the map data may be data acquired from public institutions or companies. Since the map data is widely used in navigation technology, further description is omitted.

According to some example embodiments of the present disclosure, the controller 110 may determine the movement range based on the current location of the moving object, the state of charge of the battery, and information related to performance of the moving object. Here, the information related to the performance of the moving object may be information indicating fuel efficiency of the moving object.

The information related to the performance of the moving object may include at least one of information about the average fuel efficiency of the moving object provided from the manufacturer of the moving object, information about the maximum fuel efficiency of the moving object provided from the manufacturer, and information about the minimum fuel efficiency of the moving object provided from the manufacturer. The controller 110 may determine the movement range based on the information about the fuel efficiency provided from the manufacturer of the moving object. For example, the controller 110 may determine the movement range based on the current location of the moving object, the state of charge of the battery, and the information about the minimum fuel efficiency of the moving object provided from the manufacturer.

The information related to the performance of the moving object may include at least one of information about the actual average fuel efficiency according to recent driving of the moving object, information about the actual maximum fuel efficiency according to recent driving of the moving object, and information about the actual minimum fuel efficiency according to recent driving of the moving object. According to the user's driving habits, there may be difference between the fuel efficiency provided from the manufacturer of the moving object and the fuel efficiency determined while the user is actually driving. Therefore, the controller 110 may determine the movement range based on the information about the actual fuel efficiency according to recent driving of the moving object. For example, the controller 110 may determine the movement range based on the current location of the moving object, the state of charge of the battery, and the information about the actual minimum fuel efficiency according to recent driving of the moving object.

According to some example embodiments of the present disclosure, the controller 110 may determine the movement range based on the current location of the moving object, the state of charge of the battery, and information about the surrounding streets of the current location. Here, the information about the surrounding streets of the current location may be information acquired from map data.

The information about the surrounding streets of the current location may include at least one of information related to elevation of the surrounding streets, information related to slope of the surrounding streets, information related to vehicle congestion in the surrounding streets, information related to freeway present within the surrounding streets, and information related to national highway present within the surrounding streets.

For example, in the case of roads with slope such as uphill, the driving range in which the moving object may drive may be reduced. As another example, when the moving object is driven on a congested road, the driving range in which the moving object may drive may be reduced. Therefore, the controller 110 may determine the movement range based on the current location of the moving object, the state of charge of the battery, and the information about the surrounding streets of the current location.

According to some example embodiments of the present disclosure, the controller 110 may determine the movement range based on the current location of the moving object, the state of charge of the battery, the information related to the performance of the moving object, and the information about the surrounding streets of the current location.

The controller 110 may determine at least one charging station present within the movement range (S320). For example, the controller 110 may determine at least one charging station present within the movement range based on map data stored in the storage 120.

The controller 110 may determine a first charging station among the at least one charging station based on predetermined preference information of the user and information related to the at least one charging station (S330).

Here, the preference information may be information indicating the user's propensity of using a charging station. Alternatively, the preference information may be information indicating the user's habits of using a charging station. The preference information may be information indicating whether the user is a type that focuses on stability of battery charging or a type that focuses on charging cost of the battery. Focusing on the stability may be understood as the preference of the user that visits a charging station in which an available charging port is present. Focusing on the stability may be understood as the preference of the user that does not visit a charging station in which the available charging port is absent and thus, the user needs to wait for use of a charging port of another user to be completed. Focusing on the charging cost may be understood as the preference of the user that visits a charging station of which charging cost is low although the available charging port is absent in the charging station. Focusing on the charging cost may be understood as the preference of the user that visits a charging station when the charging cost is low although the charging station is present at somewhat far distance.

The preference information may be predetermined based on at least one of first weight information indicating a weight for charging cost input from the user, second weight information indicating a weight for presence or absence of an available charging port input from the user, third weight information indicating a weight for performance of a charging port input from the user; and fourth weight information indicating a weight for a travel distance input from the user.

According to some example embodiments of the present disclosure, the preference information may be determined based on a history or log of the user visiting a charging station.

For example, the preference information may be predetermined based on first cost information about the average charging cost of at least one second charging station used by the user, reservation information indicating whether the user has reserved and used an unavailable charging port at the at least one second charging station, first charging port performance information about the average performance of charging ports used by the user at the at least one second charging station, and first travel distance information about the average travel distance moved by the user to visit the at least one second charging station.

As another example, the preference information may be predetermined based on cost information about charging cost of a charging station that the user most recently used, reservation information indicating whether the user has reserved and used an unavailable charging port at the charging station that the user most recently used, charging port performance information about the average performance of charging ports used at the charging station that the user most recently used, and travel distance information about a travel distance moved by the user to visit the charging station that the user most recently used.

According to other some example embodiments of the present disclosure, the preference information may be determined by comparing history of the user visiting the charging station and history of other users other than the user visiting the charging station.

For example, the preference information may be predetermined by comparing the first cost information about the average charging cost of the at least one second charging station used by the user and the cost information about the average charging cost of the charging station used by other users. The preference information may be predetermined by comparing the reservation information indicating whether the user has reserved and used the unavailable charging port in the at least one second charging station and the reservation information indicating whether the other users have reserved and used the unavailable charging port at the charging station. The preference information may be predetermined by comparing the first charging port performance information about the average performance of the charging port used by the user at the at least one second charging station and the charging port performance information about the average performance of the charging port used by other users at the charging station. The preference information may be predetermined by comparing the first travel distance information about the average travel distance moved by the user to visit the at least one second charging station and the travel distance information about the average travel distance moved by other users to visit the charging station.

According to some example embodiments of the present disclosure, the controller 110 may input the preference information of the user and the information related to the at least one charging station to a neural network model trained to determine a customized charging station from preference information of users and information related to charging stations, and may determine the first charging station among the at least one charging station. A second neural network model may be a network model based on CNN, ANN, DNN, or RNN. The second neural network model may be a model that determines the first charging station similar to preference of the user among the at least one charging station when the preference information and information related to the at least one charging station are input. Hereinafter, the second neural network model may use the conventional network models and thus, further description is omitted.

The information related to the at least one charging station may be information about each of at least one charging station determined to be present within the movement range. The information related to the at least one charging station may include at least one of second cost information about charging cost of the at least one charging station, first available charging port information indicating whether an available charging port is present within the at least one charging station, second charging port performance information about performance of a charging port present within the at least one charging station, and second travel distance information about a travel distance to the at least one charging station.

Since the first charging station is determined among the at least one charging station based on the preference information of the user and the information related to the at least one charging station, the user may be provided with a charging station that matches the preference of the user.

For example, the controller 110 may predetermine the preference information as that the user is a type that focuses on stability based on the weight input from the user or the history of the user visiting the charging station. The controller 110 may determine the first charging station in which the available charging port is present based on the predetermined preference information and information related to the at least one charging station. As another example, the controller 110 may predetermine the preference information as that the user is a type that focuses on charging cost based on the weight input from the user or history of the user visiting the charging station. The controller 110 may determine the first charging station of which charging cost is low based on the predetermined preference information and the information related to the at least one charging station. As still another example, the controller 110 may predetermine the preference information as that the user is a type that focuses on performance of a charging port based on the weight input from the user or the history of the user visiting the charging station. The controller 110 may determine the first charging station in which a charging port with excellent performance is present based on the predetermined preference information and the information related to the at least one charging station.

According to some example embodiments of the present disclosure, the first charging station may include at least one of a charging station preset by the user, a charging station at which a pass held by the user is available, and a charging station visited by the moving object a preset number of times or more. For example, when the charging station is preset by the user is present among at least one charging station present within the movement range, the controller 110 may determine the preset charging station as the first charging station. As another example, when the charging station at which the pass held by the user is available is present among the at least one charging station present within the movement range, the controller 110 may determine the charging station at which the pass held by the user is available as the first charging station. As still another example, when the charging station visited by the moving object a preset number of times or more is present among the at least one charging station present within the movement range, the controller 110 may determine the charging station visited by the moving object a preset number of times or more as the first charging station.

According to some example embodiments of the present disclosure, when the first charging station is determined, the display unit 140 may display information related to the first charging station.

Here, the information related to the first charging station may include at least one of third cost information about charging cost of the first charging station, second available charging port information indicating whether an available charging port is present within the first charging station, third charging port performance information about performance of a charging port present within the first charging station, third travel distance information about a travel distance to the first charging station, a route indicating a route from the current location to the first charging station, and pass information indicating whether a pass held by the user is available at a charging station.

According to the aforementioned configuration, the battery scheduling device 100 may determine the first charging station based on the predetermined preference information of the user. Therefore, the user may be provided with a charging station suitable for the user's preference from the battery scheduling device 100.

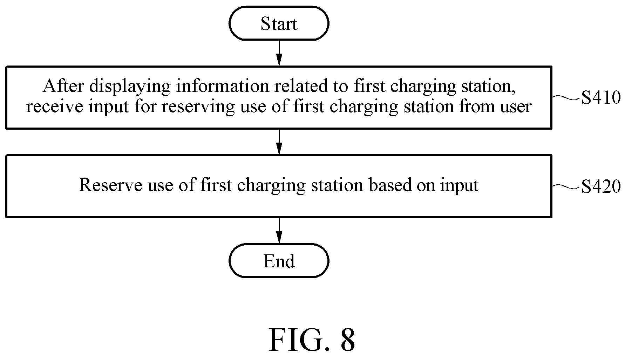

According to some example embodiments of the present disclosure, when the information related to the first charging station is displayed on the display unit 140, the user may verify the information related to the first charging station and then may reserve the use of the first charging station. In detail, the controller 110 may receive an input for reserving the use of the first charging station from the user through the user input unit 150. The controller 110 may transmit information for reserving the use of the first charging station to the server 200 through the communication unit 130. In this case, the server 200 may reserve the first charging station such that the first charging station may be used by the user of the moving object. Hereinafter, an example of reserving, by the battery scheduling device 100, the first charging station is described with reference to FIG. 8.

FIG. 8 is a flowchart illustrating an example of a method of reserving, by a battery scheduling device, a first charging station according to some example embodiments of the present disclosure.

Referring to FIG. 8, after displaying information related to the first charging station, the controller 110 of the battery scheduling device 100 may receive an input for reserving use of the first charging station from the user (S410).

In detail, the information related to the first charging station displayed on the display unit 140 may include an indicator for reserving the use of the first charging station. Here, the indicator refers to information provided to the user and a preset operation may be performed in an area in which the indicator is displayed, based on a touch input from the user. For example, the indicator may be a reservation button displayed on the display unit 140. The controller 110 may receive the input for reserving the use of the first charging station from the user through the indicator displayed on the display unit 140.

The input for reserving the use of the first charging station may include an input for selecting a charging port and an input for an estimated arrival time at which the moving object arrives at the first charging station.

In detail, the controller 110 may receive an input for selecting a first charging port among at least one charging port present within the first charging station from the user. The controller 110 may receive the input for the estimated arrival time at which the moving object arrives at the first charging station. Depending on example embodiments, the controller 110 may determine the estimated arrival time based on the current location of the moving object and the location of the first charging station. The controller 110 may reserve the first charging station based on the determined estimated arrival time and the input for selecting the first charging port from the user.

In detail, when the input for reserving the use of the first charging station is received from the user, the communication unit 130 may transmit information for reserving the first charging station to the server 200. The server 200 that receives the information for reserving the first charging station may reserve the first charging station based on the information for reserving the first charging station. For example, the server 200 may reserve the first charging station such that another user other than the user of the moving object may not use a first charging port of the first charging station at a first time.

According to the aforementioned configuration, the battery scheduling device 100 may reserve the use of the first charging station based on the input from the user. Due to a relatively low spread rate of charging stations compared to the spread of electric vehicles, the user may not immediately charge a battery of the moving object although the user visits a charging station. However, the battery scheduling device 100 according to the present disclosure may reserve the use of the first charging station based on the input from the user. Therefore, the user may conveniently visit the charging station at a desired time and may charge the battery of the moving object.

The description related to the example embodiments is provided such that one of ordinary skill in the art to which the present disclosure pertains may employ or implement the present disclosure. Various modifications to the example embodiments will be apparent to one of ordinary skill in the art and general principles defined herein may be applied to other example embodiments without departing from the scope of the present disclosure. Therefore, the present disclosure is not limited to the example embodiments and should be interpreted in the broadest sense consistent with the principles and novel features presented herein.

## Claims

1. A method for determining a charging station performed by a battery scheduling device that performs scheduling for battery operation of a moving object, the method comprising:
when a specific condition is satisfied, determining a movement range indicating a range within which the moving object is movable from a current location of the moving object based on the current location and a state of charge (SOC) of the battery;
determining at least one charging station present within the movement range; and
determining a first charging station among the at least one charging station based on predetermined preference information of a user and information related to the at least one charging station.

2. The method of claim 1, wherein the specific condition includes a first condition satisfied when an input for requesting a search for a charging station is received from the user of the moving object or a second condition satisfied when a residual amount of the battery is less than a preset threshold.

3. The method of claim 1, wherein the preference information is predetermined based on at least one of first weight information indicating a weight for charging cost input from the user, second weight information indicating a weight for presence or absence of an available charging port input from the user, third weight information indicating a weight for performance of a charging port input from the user, and fourth weight information indicating a weight for a travel distance input from the user.

4. The method of claim 1, wherein the preference information is predetermined based on at least one of first cost information about the average charging cost of at least one second charging station used by the user, reservation information indicating whether the user has reserved and used an unavailable charging port at the at least one second charging station, first charging port performance information about the average performance of charging ports used by the user at the at least one second charging station, and first travel distance information about the average travel distance moved by the user to visit the at least one second charging station.

5. The method of claim **1,** wherein the information related to the at least one charging station includes at least one of second cost information about charging cost of the at least one charging station, first available charging port information indicating whether an available charging port is present within the at least one charging station, second charging port performance information about performance of a charging port present within the at least one charging station, and second travel distance information about a travel distance to the at least one charging station.

6. The method of claim 1, wherein the determining the movement range indicating the range within which the moving object is movable from the current location of the moving object based on the current location and the state of charge (SOC) of the battery comprises determining the movement range based on the current location of the moving object, the state of charge of the battery, and information related to performance of the moving object, and
wherein the information related to the performance of the moving object includes at least one of information about the average fuel efficiency of the moving object provided from the manufacturer of the moving object, information about the maximum fuel efficiency of the moving object provided from the manufacturer, information about the minimum fuel efficiency of the moving object provided from the manufacturer, information about the actual average fuel efficiency according to recent driving of the moving object, information about the actual maximum fuel efficiency of the moving object, and information about the actual minimum fuel efficiency of the moving object.

7. The method of claim 1, wherein the determining the movement range indicating the range within which the moving object is movable from the current location of the moving object based on the current location and the state of charge (SOC) of the battery comprises determining the movement range based on the current location of the moving object, the state of charge of the battery, and information about surrounding streets of the current location, and
wherein the information about the surrounding streets includes at least one of information related to elevation of the surrounding streets, information related to slope of the surrounding streets, information related to vehicle congestion in the surrounding streets, information related to freeway present within the surrounding streets, and information related to national highway present within the surrounding streets.

8. The method of claim 1, wherein the determining the movement range indicating the range within which the moving object is movable from the current location of the moving object based on the current location and the state of charge (SOC) of the battery comprises determining the movement range based on the current location of the moving object, the state of charge of the battery, information related to the performance of the moving object, and information about streets around the current location.

9. The method of claim 1, further comprising:
when the first charging station is determined, displaying information related to the first charging station,
wherein the information related to the first charging station includes at least one of third cost information about charging cost of the first charging station, second available charging port information indicating whether an available charging port is present within the first charging station, third charging port performance information about performance of a charging port present within the first charging station, third travel distance information about a travel distance to the first charging station, a first route indicating a route from the current location to the first charging station, and pass information indicating whether a pass held by the user is available at a charging station.

10. The method of claim 1, wherein the information related to the first charging station includes an indicator for reserving use of the first charging station, and
wherein the method further comprises, after displaying the information related to the first charging station, receiving an input for reserving the use of the first charging station from the user; and
reserving the use of the first charging station based on the input.

11. The method of claim 10, wherein the receiving the input for reserving the use of the first charging station from the user comprises:
receiving an input for selecting a first charging port from among at least one charging port present within the first charging station from the user; and
receiving an input for an estimated arrival time at which the moving object arrives at the first charging station.

12. The method of claim 1, wherein the determining the first charging station among the at least one charging station comprises inputting the preference information of the user and the information related to the at least one charging station to a neural network model trained to determine a customized charging station from preference information of users and information related to charging stations, and determining the first charging station among the at least one charging station.

13. A battery scheduling device for performing scheduling for battery operation of a moving object, the battery scheduling device comprising:
a controller configured to:
when a specific condition is satisfied, determine a movement range indicating a range within which the moving object is movable from a current location of the moving object based on the current location and a state of charge (SOC) of the battery,
determine at least one charging station present within the movement range, and
determine a first charging station among the at least one charging station based on predetermined preference information of a user and information related to the at least one charging station.

14. A method for determining a charging station performed by a server that performs scheduling for battery operation of a moving object, the method comprising:
when a specific condition is satisfied, determining a movement range indicating a range within which the moving object is movable from a current location of the moving object based on the current location and a state of charge (SOC) of the battery;
determining at least one charging station present within the movement range; and
determining a first charging station among the at least one charging station based on predetermined preference information of a user and information related to the at least one charging station.
